# EUROPEAN PATENT SPECIFICATION

(11) **EP 1 129 373 B1**
(45) Date of publication and mention of the grant of the patent: **13.07.2005**
(21) Application number: 99954278.0
(22) Date of filing: 10.11.1999
(51) Int. Cl.: G02B 5/30, B42D 15/10, G02F 1/1337, G02B 27/28

(54) **OPTICAL COMPONENT**
OPTISCHE KOMPONENTE
COMPOSANT OPTIQUE

(30) Priority: 13.11.1998 GB 9825023
(43) Date of publication of application: 05.09.2001
(73) Proprietor: Rolic AG, 6301 Zug (CH)
(72) Inventor: MOIA, Franco, CH-4402 Frenkendorf (CH)
(74) Representative: Liebetanz, Michael, Dipl.-Phys.
(86) International application number: PCT/IB1999/001810
(87) International publication number: WO 2000/029878

(56) References cited:
- EP-A- 0 689 065
- EP-A- 0 772 069
- GB-A- 2 268 906
- US-A- 2 165 974
- US-A- 4 220 705
- US-A- 5 101 296
- US-A- 5 602 661

## Description

The invention relates to an optical component containing a normally hidden image.

A particular use of the components according to the invention is in the field of protection against forgery and copying and simple yet unambiguous document authentication.

The increasingly high-quality copying techniques which are becoming available make it increasingly difficult to safeguard banknotes, credit cards, securities, identity cards and the like against forgery. Furthermore, counterfeit branded products (even including counterfeit pharmaceuticals) and copies of copyright-protected products, for example compact discs, computer software and electronics chips, are being produced and distributed worldwide. The increasing number of forgeries necessitates new authentication elements which are safeguarded against forgery and can be identified both visually and by machine.

In the field of copy-protecting banknotes, credit cards etc., there are already a considerable number of authentication elements. Depending on the value of the document to be protected, very simple or relatively highly complex elements are employed. Some countries are content to provide banknotes with metal strips which come out black on a photocopy. Although this prevents them from being photocopied, elements of this type are very easy to imitate. In contrast to this, there are also more complex authentication elements, for example holograms and cinegrams. Authentication elements of this type are based on the diffraction of light by gratings and need to be observed under different viewing angles in order to verify their authenticity. These diffracted elements produce three-dimensional images, colour variations or kinematic effects which depend on the angle of observation and have to be checked on the basis of predetermined criteria or rules. It is not practically possible to use machines for reading information, for example images or numbers, encoded using this technique. Furthermore, the information content of these elements is very limited, and only an optical specialist will be capable of discriminating definitively between forgeries and an original.

A further consideration with diffractive optical effects is that these have also been used for consumer articles such as wrapping paper, toys and the like. The relevant production methods have therefore become widely known and are correspondingly straightforward to imitate.

Further to the diffractive elements mentioned above, other components are also known which are suitable for optimum copy protection. These include optical components, as disclosed for example by EP-A-689084 or EP-A-689065, that is to say components with an anisotropic liquid-crystal layer, which latter has local structuring of the molecular orientation.

These components are based on a hybrid layer structure which consists of an orientation layer and a layer which is in contact with it and consists of liquid-crystal monomers or pre-polymers cross-linked with one another. In this case, the orientation layer consists of a photo-oriented polymer network (PPN) - synonymous with LPP used in other literature - which, in the onented state, through a predetermined array, defines regions of alternating orientations. During the production of the liquid-crystal layer structure, the liquid-crystal monomers or pre-polymers are zonally oriented through interaction with the PPN layer. This orientation which, in particular, is characterised by a spatially dependent variation of the direction of the optical axis, is fixed by a subsequent cross-linking step, after which a cross-linked, optically structured liquid crystal monomer or pre-polymer (LCP) with a pre-established orientation pattern is formed. Under observation without additional aids, both the orientation pattern itself and the information written into the cross-linked LCP layer are at first invisible. The layers have a transparent appearance. If the substrate on which the layers are located transmits light, then the LCP orientation pattern or the information which has been written become visible if the optical element is placed between two polarisers. If the birefringent LCP layer is located on a reflecting layer, then the pattern, or the corresponding information, can be made visible using only a single polariser which is held over the element. LPP/LCP authentication elements make it possible to store information, virtually without restriction, in the form of text, images, photographs and combinations thereof. In comparison with prior art authentication elements, the LPP/LCP elements are distinguished in that the authenticity of the security feature can be verified even by a layman since it is not first necessary to learn how to recognise complicated colour changes or kinematic effects. Since LPP/LCP authentication elements are very simple, reliable and quick to read, machine-readable as well as visual information can be combined in the same authentication element.

However, there remains the risk that, in the course of time, forgers will be able to master this technique.

In the components described above, one pictorial element is present (whether visible or invisible).

It would be desirable to improve the security or entertainment value of such a component.

According to the present invention, an optical component comprises one or more retarder(s) in which are embedded a plurality of images, the images being so arranged that, at any point in the plane of the component, an element of not more than one image is present, each image being associated with a different interaction with polarised light. This association can be achieved in various ways, for example, each image is embedded in patterned retarder(s) (one or more), each of them having patterns with different optical axis.

The invention also provides a viewing system, comprising a source of polarised light, a component as set forth above, through which the polarised light can travel, and an analyser (in practice, a polarising sheet) for light which has traversed the component, the analyser being rotatable about the axis of the direction of travel of the light. The source of polarised light may be a polarising sheet applied to the surface of the component.

The different images may be contained in successive parallel stripes, each preferably narrower than the eye can resolve, into which the surface area of the component is divided; if these are n images, any one image will usually be represented on every nth stripe.

Such an optical component has the surprising property, valuable in the fields of entertainment, document authentication and forgery countermeasures, that simply by rotating a polariser (= the analyser), a plurality of different images, all visible in ordinary light, can be seen one after the other. Previously, it was possible to reveal only one hidden image in this way. However, all the advantages of the "one hidden image" technology, as described for example in EP-A-689065, PCT/IB98/00687 or CH 841/98, can be maintained.

The invention will now be described by way of example with reference to the accompanying drawings, in which:
Figure I shows magnified a first optical component according to the invention, manufactured with two retarders, in its appearance when viewed through an analyser in the orientation indicated in the Figure;
Figure 2 shows the same component as Figure 1, in its appearance when viewed through an analyser in the orientation indicated in Figure 2, and
Figure 3 shows the same component as Figure 1, in its appearance when viewed through an analyser in the orientation indicated in Figure 3 leading to the 'negative' counterpart of the image shown in Figure 1;
Figure 4 shows the same optical component as Figure 1, in its appearance when viewed through an analyser in the orientation indicated in Figure 4 leading to the 'negative' counterpart of the image shown in Figure 2;
Figure 5 shows a striped photo mask which includes the information of picture I. This striped photo mask is needed for (this example of) the production process of the optical component.

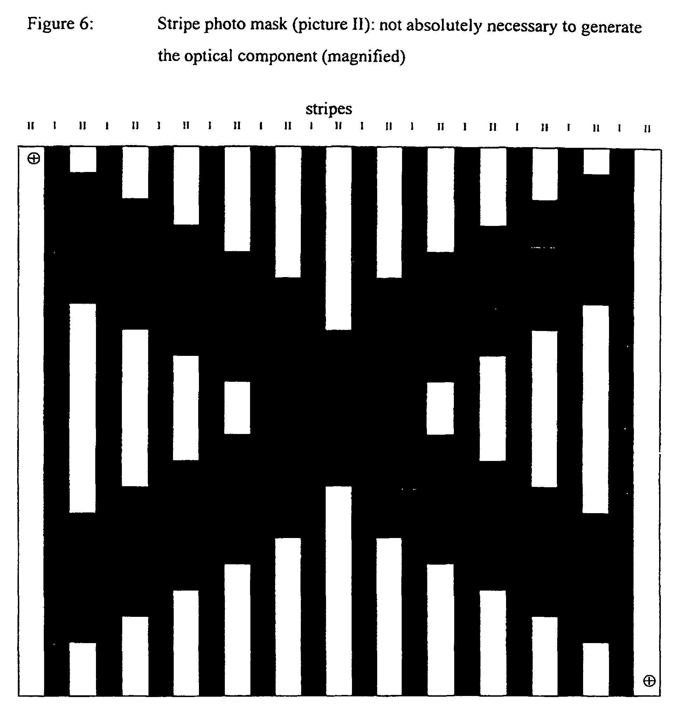

Figure 6 shows a striped photo mask which includes the information of a second image, picture II. This photo mask is optional in the production process of the optical component.
Figure 7 shows a striped but otherwise completely unpatterned photo mask, in other words including no picture information. This striped photo mask is used in the production process of the optical component.
Figure 8 shows a photo mask which reflects picture II. This mask does not include any stripes as shown in Figures 5, 6 and 7.
Figure 9 shows the contrast dependence of each image (here 2 images) related to the analyser angle with respect the optical component. The analyser angle is mterrelated to the x-axis (when the analyser is parallel to the x-axis then the angle is 0°). At specific analyser angles peaks of maximum contrasts are reached.
Figure 10 shows the contrast dependence of each image (here 2 images) related to the analyser angle in case of a second optical component according to the invention and described in the following Figures, this second optical component being manufactured with 1 retarder. The analyser angle is interrelated to the x-axis (when the analyser is parallel to the x-axis then the angle is 0°). At specific analyser angles peaks of maximum contrasts are reached.
Figure 11 shows, magnified, the second optical component in its appearance when viewed through an analyser in the indicated orientation;
Figure 12 shows the second optical component in its appearance when viewed through an analyser in the indicated orientation different from Figure 11;
Figure 13 shows a striped photo mask which includes the 'positive' ('positive' means dark information patterns on bright background) information of picture I of the second optical component.
Figure 14 shows a striped photo mask which includes the 'negative' ('negative' means bright information patterns on dark background) information of picture I.
Figure 15 shows a striped photo mask which includes the 'positive' information of a second image, picture II.
Figure 16 shows a striped photo mask which includes the 'negative' information of a second image, picture II. The photo masks of Figures 13-16 are all needed in this example of the production process of the optical component.
Figure 17 shows schematically an optical component according to the invention, working in the reflective mode.

### Example 1:

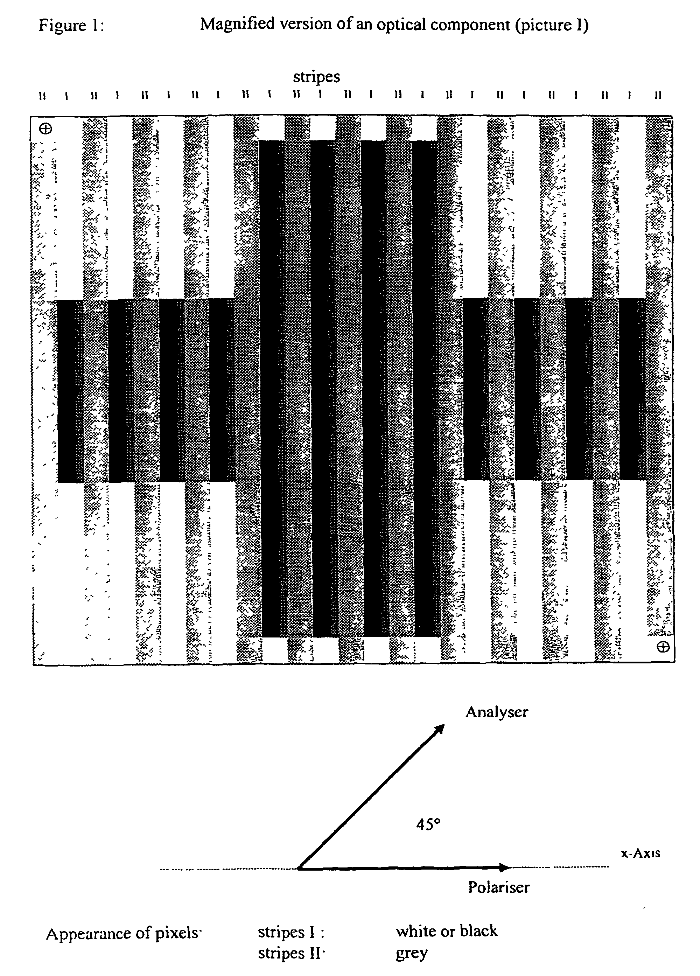

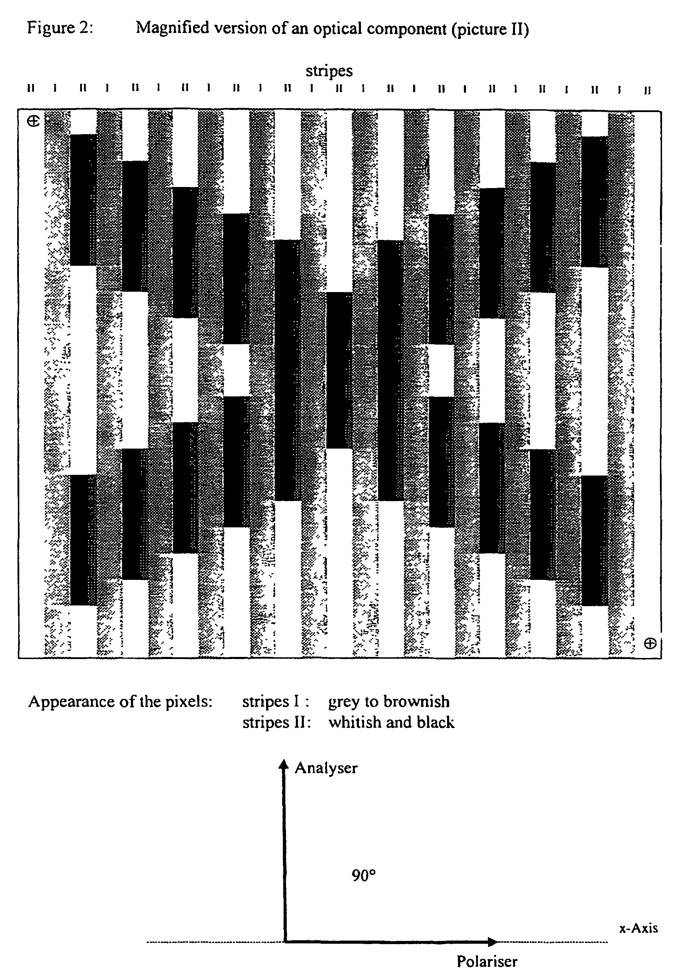

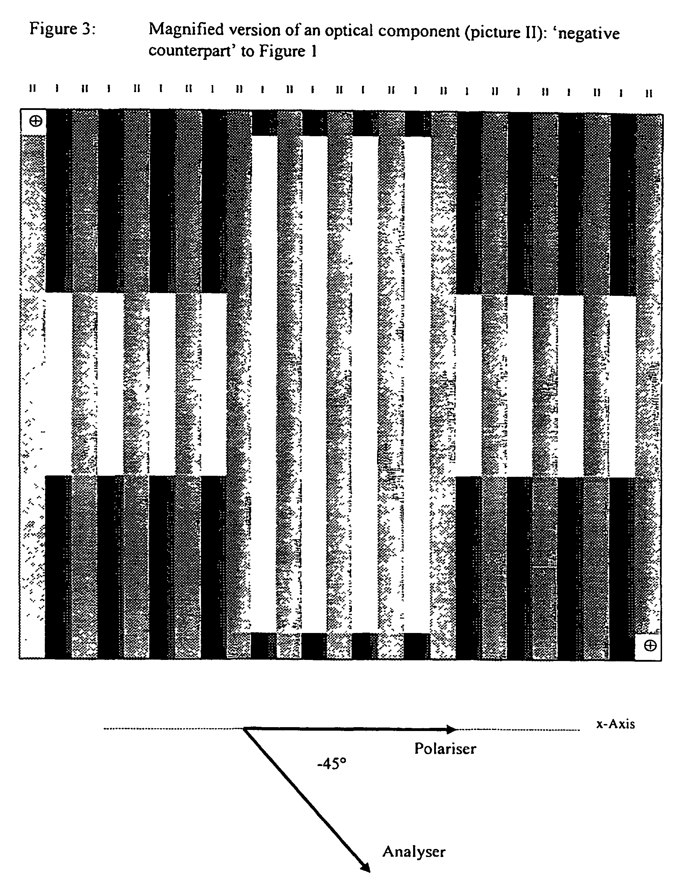

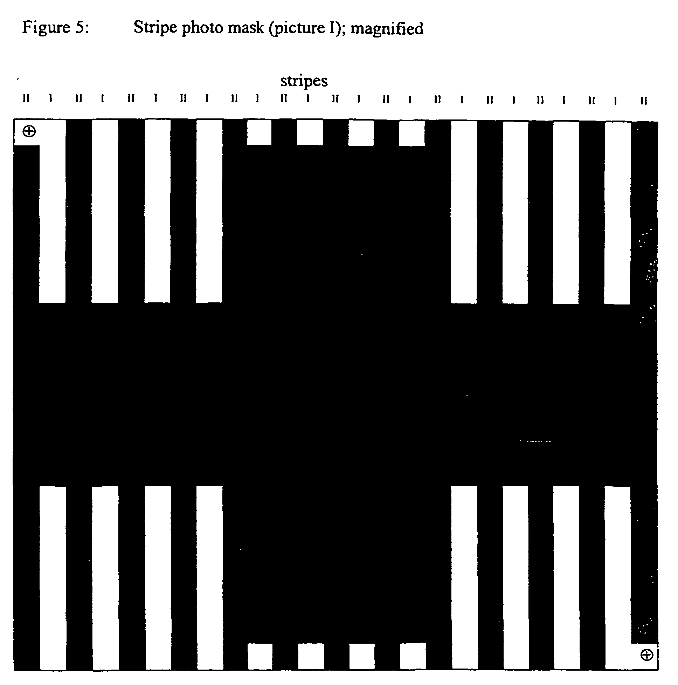

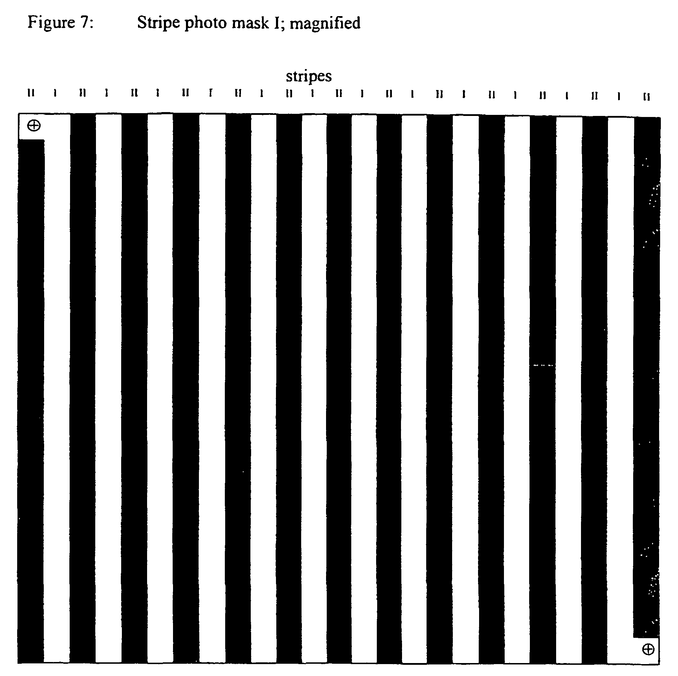

An optical component according to Figures 1, 2, 3 and 4 is made by applying a layer of suitable orientable linearly photopolymerisable (LPP) material such as cinnamic acid derivatives or ferulic acid denvatives illustrated for instance in patent publications EP-A-611786, WO 96/10049 and EP-A-763552 to a transparent substrate. This layer with a thickness of about 50nm is exposed through a photo mask, shown schematically in Figure 5, to polarised light of different polarisation directions. The photo mask is of alternative adjacent opaque (II) and in-principle-transparent (I) stripes which, when projected onto the layer of LPP material, have a width of 1/8mm each, which is smaller than the eye can resolve. The stripes (I) are themselves blacked out in parts, to leave the image of an upright cross. The illumination sequence for this first LPP layer is shown in Table 3 with ultimate result shown in Table 1: the angle α of the linear polarised light with a suitable wavelength in respect to the x-Axis travelling through the bright picture areas of stripes I (Figure 5) is +13.5° (illumination step 1); the picture illustrated in Figure 5 is an upright cross but any image can be used. Then, this mask is replaced by the photo mask shown in Figure 7. The opaque stripes (II) of both masks coincide, but the former unexposed areas of stripes I of Figure 5 will be now exposed at an angle α of -13.5° (illumination step 2); finally this mask is removed and a third illumination step parallel to the x-Axis (α = 0°) is applied to expose the stripes II of Figure 5 (illumination step 3). After these 3 illumination steps all areas of the first LPP layer has been exposed to polarised light of a suitable wavelength. These exposures cause polymerisation, in respectively different preferred alignments.

Thereafter, this first LPP layer is coated with a cross-linkable liquid crystal monomer or pre-polymer mixture (LCP) which shows birefringence, such as LCP mixture M_{LCP} described in more detail later (̵M_{LCP} has an optical anisotropy Δn of 0.13 leading to a film thickness of 1.5µm). The LCP material adopts the alignment (if any) of the immediately underlying region of the LPP layer. The whole is then exposed to unpolarised (isotropic) light of a suitable wavelength to crosslink the LCP material (illumination step 4 of Table 3).

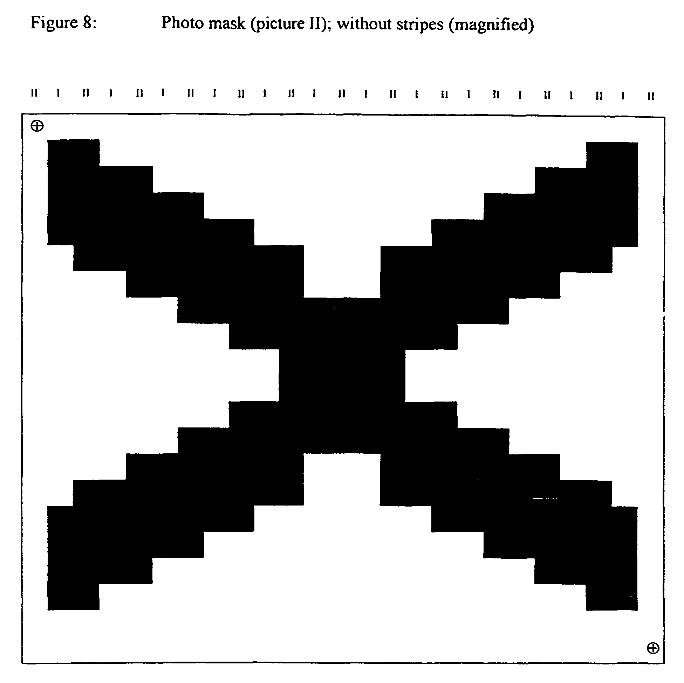

Then, a second LPP layer (film thickness about 50nm) is coated directly on the former LCP layer. Similar to the first LPP layer further 4 exposures (illumination steps 5 to 8 in Table 3) to polarised light of a suitable wavelength are applied to this second LPP layer: the angle α of the linear polarised light in respect to the x-Axis travelling through the bright picture areas of stripes 1 of the photo mask (Figure 5) is +31.5° (illumination step 5). Then, this mask is replaced by the photo mask shown in Figure 7 and the former unexposed areas of stripes I of Figure 5 will now be exposed at an angle α of -31.5° (illumination step 6). Then, the current (Fig. 7) mask is replaced by the photo mask without any stripes of Figure 8; the picture II illustrated in Figure 8 is a diagonal cross but any image can be used. The bright areas of stripes II which were not exposed yet are illuminated with polarised light at an angle α of +45° (illumination step 7). Finally also this mask is removed and all areas which were not exposed before are illuminated by polarised light parallel to the x-Axis (α = 0°) (illumination step 8). These exposures cause polymerisation, in respectively different preferred alignments.

Thereafter, this second LPP layer is coated with a cross-linkable liquid crystal monomer or pre-polymer mixture (LCP) which shows birefringence, such as LCP mixture M_{LCP} (M_{LCP} has an optical anisotropy Δn of 0.13 leading to a film thickness of 1.5µm). Again, the LCP material adopts the alignment (if any) of the immediately underlying region of the LPP layer. The whole is then exposed to unpolarised (no mask necessary) light of a suitable wavelength to crosslink the LCP material (illumination step 9).

The various retarder layers may have the same (as here) or different optical retardations Δnd.

This completes the manufacture of the optical component, which in normal light is-transparent.

In use, the optical component will be examined for authenticity in the following way.

It is placed on a light box emitting linearly polarized light, and appears transparent m transmission.

To check it, it is viewed through a rotatable sheet carrying a polarizing grating; such sheets are known as analysers.

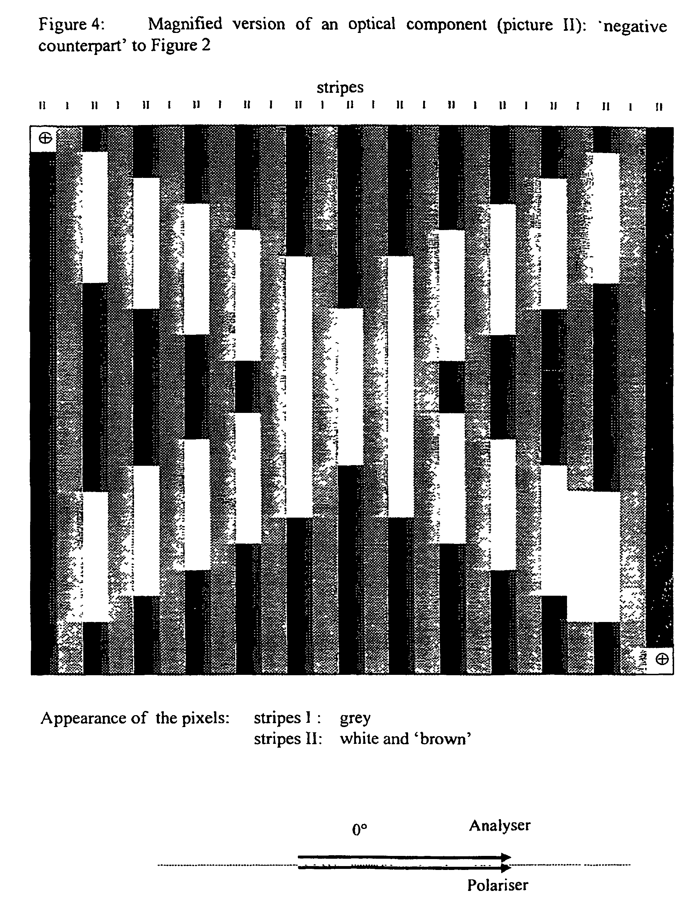

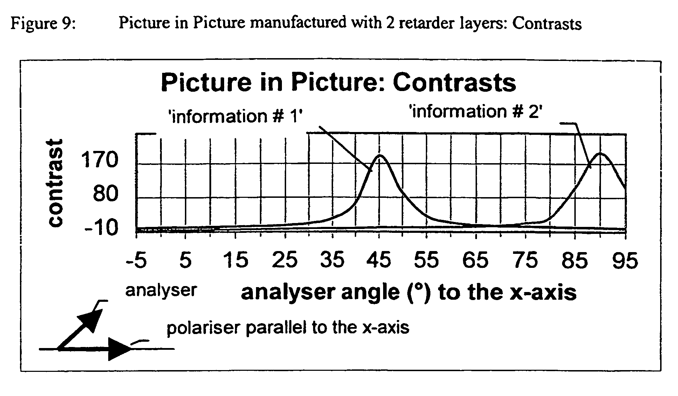

In summary, because of the different modes of interaction of the two images with polarised light, as the analyzer is rotated, the upright cross (stripes I, Figure 1) appears and disappears, to be replaced by the diagonal cross (stripes II, Figure 2), which also disappears on continued rotation of the analyzer. It is easy to verify whether or not a document of unknown authenticity displays two different images when inspected this way. The dependence of the contrast on the analyser angle is also represented in Figure 9.

In more specific detail, the appearance of images depends on various angles and retardation's as set forth in the following tables, in which the symbols have the following meaning:
- δ₁: Optical axis of first LCP layer;
- δ₂: Optical axis of second LCP layer;
- x-axis:: Axis of polarising grating of inspection arrangement; α = 0° means parallel to the x-Axis
- x, y:: colour co-ordinates indicate the position in the Chromaticity Diagram; for example, stripes I in Figure 2 appear grey to brownish; the colour co-ordinates of these stripes are calculated as x=0.3684 and y=0.3609 leading to such a slightly coloured appearance described as brownish.
- normed brightness:: 1.000 = brightness of inspection light as viewed through polarisers and analyser arranged parallel, no retarder present.
- Δnd₁, Δnd₂: Optical retardations of the LCP layers (Δnd₁ = Δnd₂ = 0.2µm)
- d₁, d₂:: Thickness of LCP retarder layers (d₁ = d₂ = 1.5µm).

Table 2 shows calculated values of the feasible contrast ratios and colours which can be achieved with the optical component described in Example 1.

### Example 2:

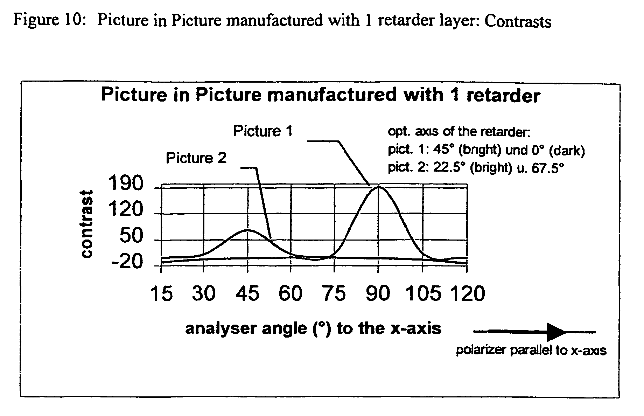

In another example according to the invention, it is possible to make a similar secure component with only one retarder layer. This component is examined for authenticity by the procedure already described. Upon rotating the analyser, peaks of maximum contrast are obtained at specific rotation angles, at each of which a respective one of the (otherwise hidden) images becomes visible (Figure 10).

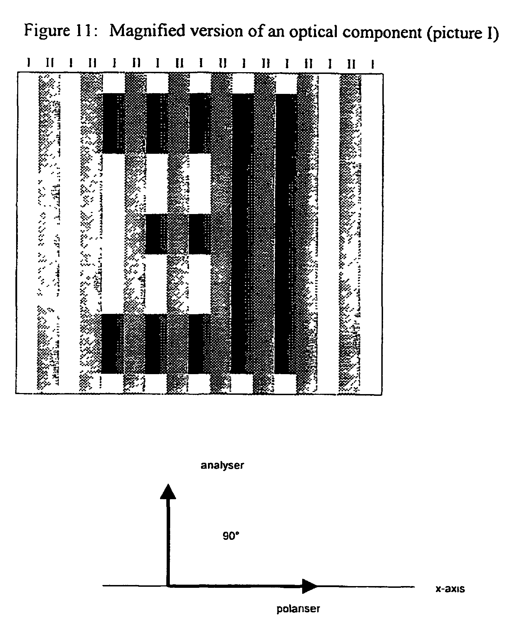

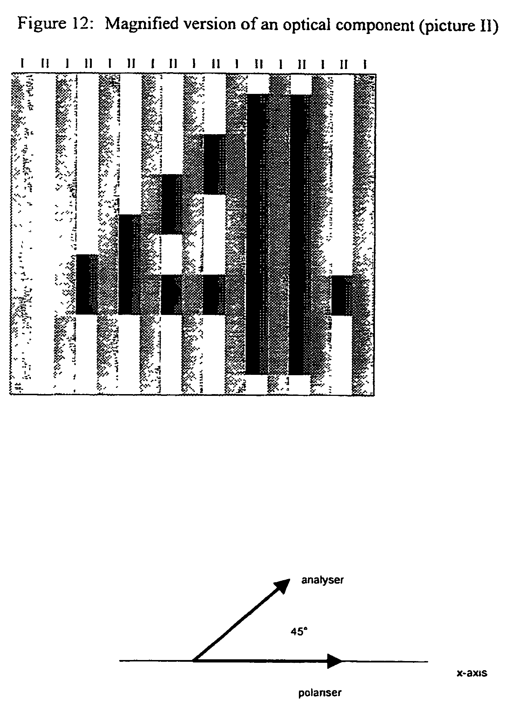

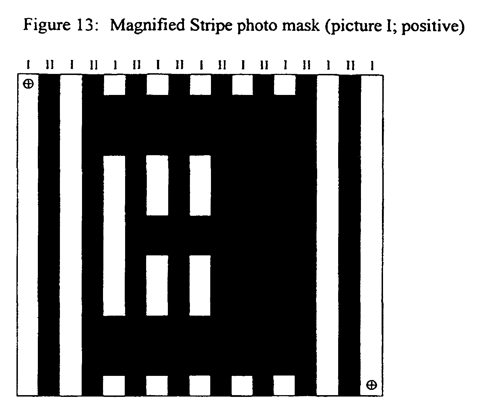

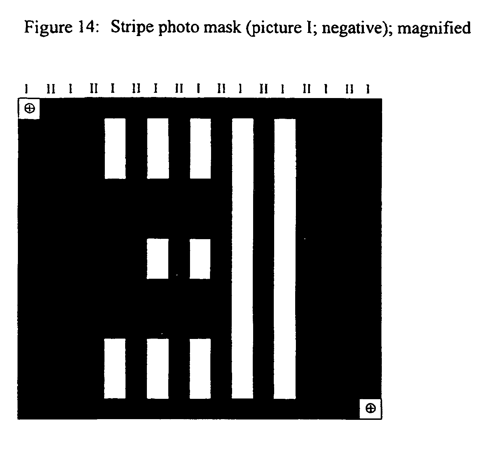

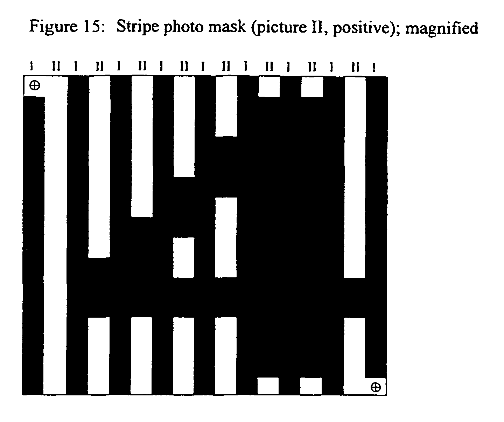

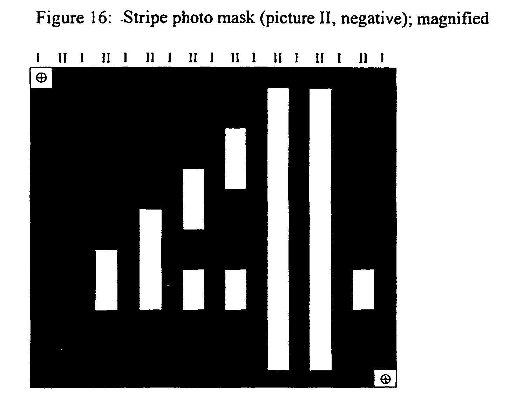

An optical component according to Figures 11 and 12 (their 'negative' counterparts are not shown here, but appear - similar to Example 1 - when the analyser angle to the x-axis is 0° and -45°, respectively) is made by applying a layer of suitable orientable linearly photo-polymerisable (LPP) material such as cinnamic acid derivatives or ferulic acid derivatives illustrated for instance in patent publications EP 611786. WO 96/10049 and EP 763552 to a transparent substrate. This layer with a thickness of about 50nm is exposed through a photo mask, shown schematically in Figure 13, to polarised light of different polarisation directions. The photo mask is of alternative adjacent opaque (II) and in-principle-transparent (I) stripes which, when projected onto the layer of LPP material, have a width of 1/8mm each which is smaller than the eye can resolve (same resolutions show masks illustrated in Figures 14, 15 and 16). The stripes (I) are themselves blacked out in parts, to leave the image of a character '3'. The illumination sequence for this LPP layer is: the angle α of the linear polarised light with a suitable wavelength in respect to the x-axis travelling through the bright picture areas of stripes I (Figure 13) is +45° (illumination step 1); the picture illustrated in Figure 13 is a character '3' but any image can be used. Then, this mask is replaced by the photo mask shown in Figure 14. This mask is - except the opaque stripes II - exactly the 'negative' counterpart of the mask shown in Figure 13. The opaque stripes (II) of both masks coincide, but the former unexposed areas of stripes I of Figure 13 will be now exposed at an angle α of 0° (illumination step 2); then a third mask (Figure 15) is applied including the image information of picture II; the picture illustrated in Figure 15 is a character '4', but any image can be used. The angle α of the linear polarised light in respect to the x-axis travelling through the bright picture areas of stripes II of the photo mask (Figure 15) is +22.5° (illumination step 3). Then, this mask is replaced by the photo mask shown in Figure 16 and the former unexposed areas of stripes II of Figure 15 will now be exposed at an angle α of +67.5° (illumination step 4). These exposures cause polymerisation, in respectively different preferred alignments.

Thereafter, this LPP layer is coated with a cross-linkable liquid crystal monomer or pre-polymer mixture (LCP) which shows birefringence, such as mixture M_{LCP} (M_{LCP} has an optical anisotropy Δn of 0.13 leading to a film thickness of 1.5µm). The LCP material adopts the alignment (if any) of the immediately underlying region of the LPP layer. The whole is then exposed to unpolarised (no mask necessary) light of a suitable wavelength to crosslink the LCP material (illumination step 5).

This completes the manufacture of the optical component, which in normal light is transparent.

In use, the optical component will be examined for authenticity in the following way.

It is placed on a light box emitting linearly polarised light, and appears transparent in transmission.

To check it, it is viewed through a rotatable sheet carrying a polarising grating; such sheets are known as analysers.

In summary, because of the different modes of interaction of the various images patterns with polarised light, as the analyser is rotated, the character '3' (stripes I, Figure 13) appears and disappears, to be replaced by the character '4' (stripes II, Figure 14), which also disappears on continued rotation of the analyser. It is easy to verify whether or not a document of unknown authenticity displays two different images when inspected this way.

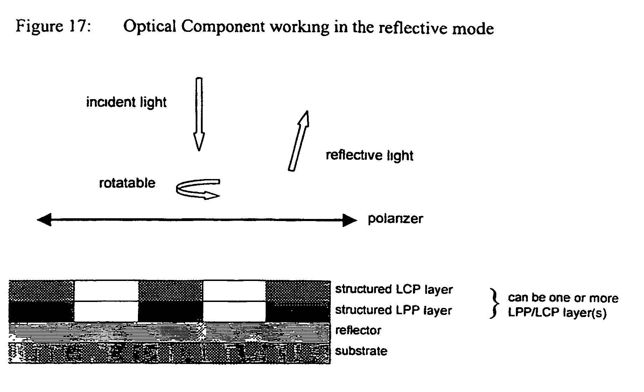

When placing or attaching the optical components described in Examples 1 and 2 on top of a reflector which maintains the polarisation direction of incident light, and when using a polariser which is rotatable about the axis of the direction of travel of the light which has traversed the polariser and the optical component, such light is reflected at said reflector and traverses a second time the optical component and said polariser (schematically shown in Figure 17). Then similar images as seen in the transmissive mode illustrated in Example I and 2 are observed: by rotating said polarizer, peaks of maximum contrasts for each image are obtained at specific rotation angles of the polarizer, enabling, at each such angle, visualisation of a respective image not otherwise visible; the image appears bluish/white or violet/whitish with relative poor contrasts because the optical retardations and its optical axis were not optimised for the reflective operation mode.

The production of a PPN (= LPP) and LCP layer which can be used according to the invention will be described still by way of example, in more detail below.

### 1. Production of a PPN layer

Suitable PPN materials are described for instance in patent publications EP-A-611786, WO 96/10049 and EP-A-763552, such as cinnamic acid derivatives or ferulic acid derivatives. For the foregoing Examples, the following PPN material was chosen:
Polymer:

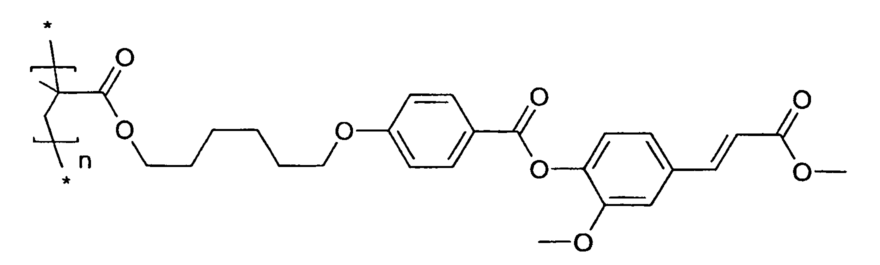

A glass plate was spin-coated with a 2 percent strength solution of the PPN material in cyclopentanone for one minute at 2000 rpm. The layer was then dried for 5 to 10 minutes at 120 °C on a hotplate. The layer was then exposed to linearly polarized light, Hg high-pressure lamp for 20 to 405 seconds (depending on the strength of the lamp and on the number of LPP/LCP layers of the optical component) at room temperature. The layer was then used as an orientation layer for liquid crystals.

### 2. Mixture M_{LCP} of cross-linkable LC monomers for the LCP layer.

In the examples, the following diacrylate components were used as cross-linkable LC monomers:

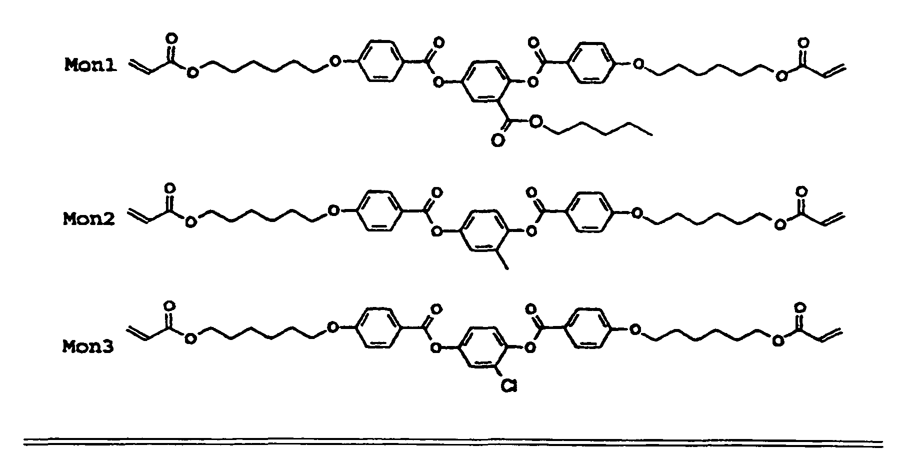

Using these components, a supercoolable nematic mixture M_{LCP} with particularly low melting point (Tm ~ 35°C) was developed, making it possible to prepare the LCP layer at room temperature.

The diacrylate monomers were present with the following composition in the mixture:

| | |
|---|---|
| Mon1 | 80% |
| Mon2 | 15% |
| Mon3 | 5% |

In addition a further 2% of the Ciba-Geigy photoinitiator IRGACURE (trade mark) was added to the mixture.

The mixture M_{LCP} was then dissolved in anisol. By means of the M_{LCP} concentration in anisol, it was possible to adjust the LCP layer thickness over a wide range. Especially for the examples of optical components described in this patent, desired retardations Δnd of 0.2µm could be achieved.

For photoinitiated cross-linking of the LC monomers, the layers were exposed to isotropic light from a xenon lamp for about 5 to 30 minutes (depending on the strength of the lamp) in an inert atmosphere.

The optical effects described above, as well as the corresponding layer structures and material compositions, represent no more than a choice from many possibilities according to the invention, and may in particular be combined in a wide variety of ways in order to develop authenticating elements.

Thus, it is of course possible for any other kind of birefringent layer than the LCP layer described to be used to produce an optical effect that can be employed in optical components, for example for authentication elements.

It is furthermore possible for the examples described above, to use not a PPN orientation layer but a different orientation layer which, according to the desired optical property and resolution, has the same or similar properties to a PPN layer. It is also conceivable to produce the orientation required for a retarder layer using a correspondingly structured substrate. A structured substrate of this type can, for example, be produced by embossing, etching and scratching.

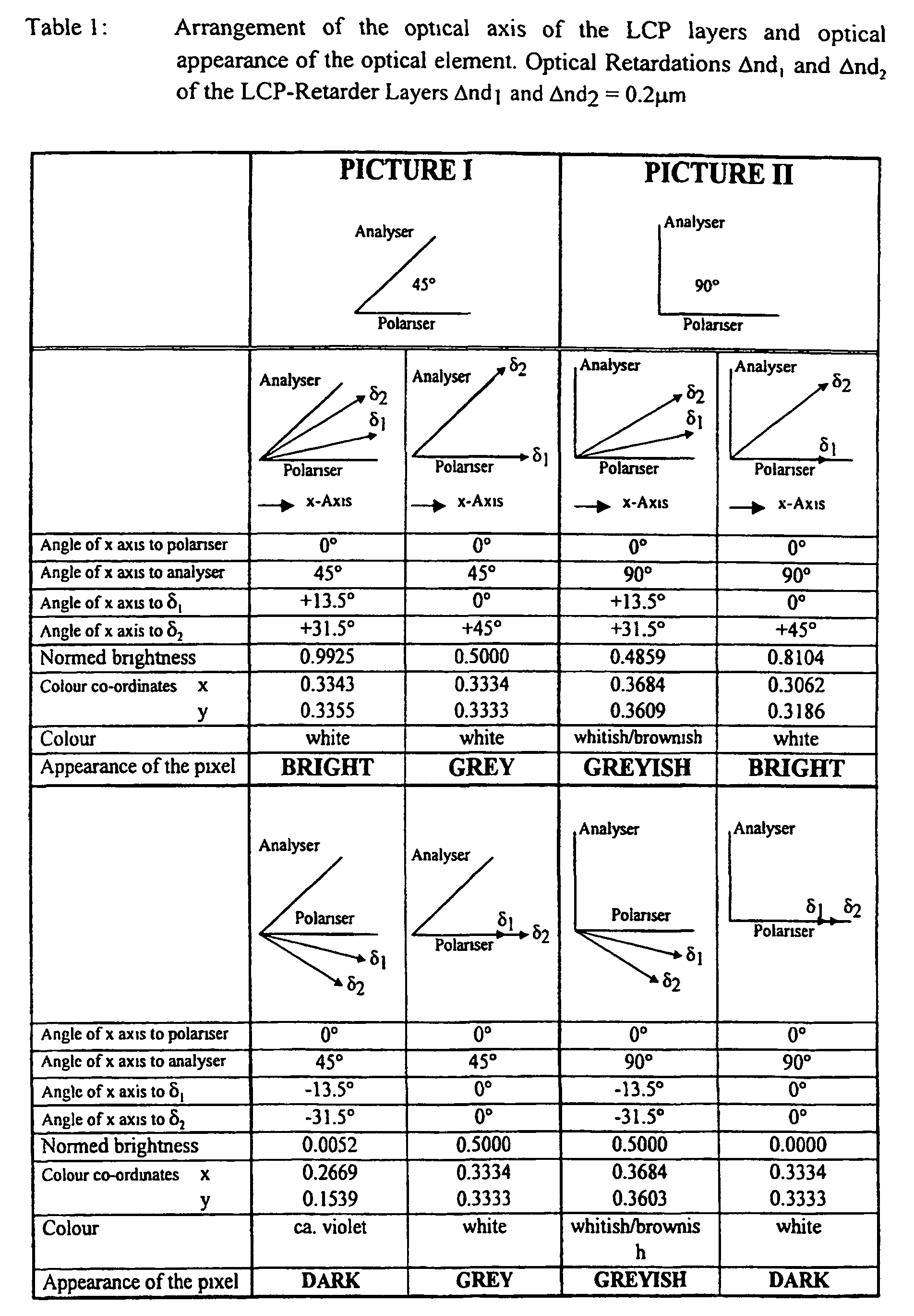

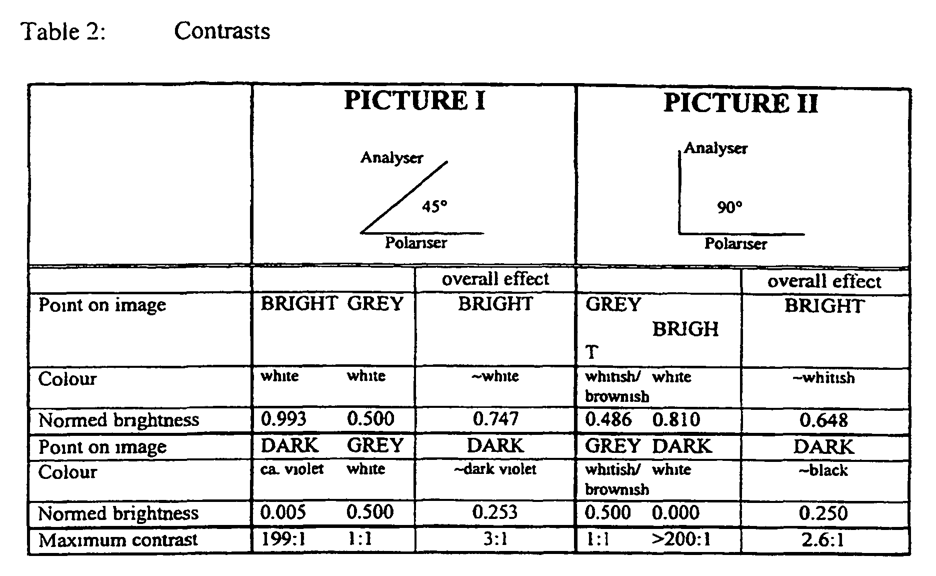

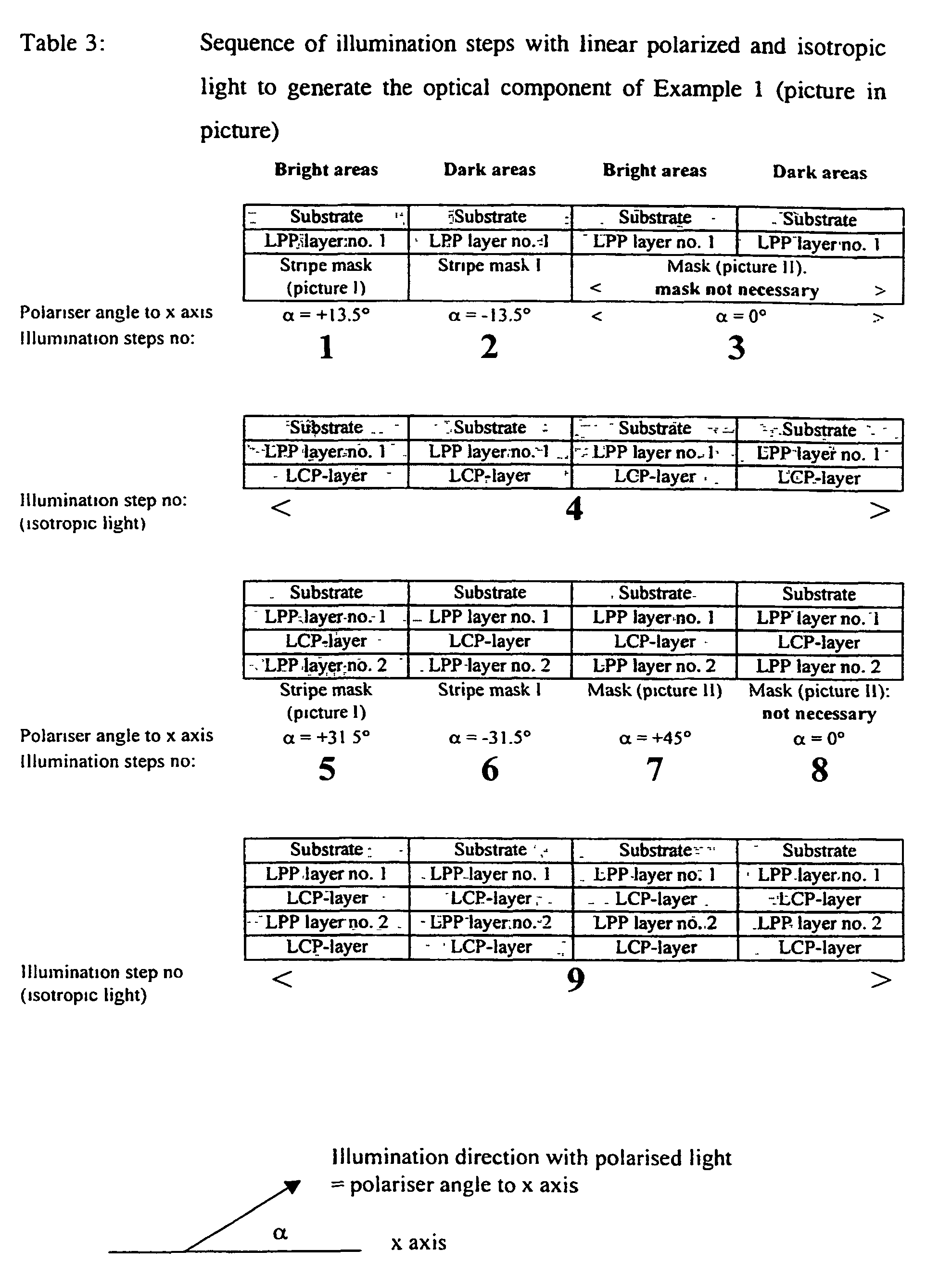

## Claims

1. An optical component, comprising one or more retarder(s) in which is/are embedded a plurality of images, the images being so arranged that, at any point in the plane of the component, an element of not more than one image is present, wherein the respective images are contained in alternate areas, wherein each image is embedded in one or more patterned retarder(s), each of them having patterns with different optical axes, so that each image is associated with a different interaction with polarised light.

2. An optical component according to Claim 1, wherein there is a plurality of retarders in which the images are embedded, the retarders having the same or different retardation values Δnd.

3. An optical component according to Claim 1 or 2, wherein the images are embedded in one or more retarder(s) having specific image patterns each having a different optical axis from the other specific image patterns.

4. An optical component according to any preceding Claim, wherein the respective images are contained in successive optionally parallel stripes.

5. An optical component according to any preceding Claim, wherein the areas or stripes are smaller or narrower than the eye can resolve enabling an optical component wherein one or more image(s) is/are (a) photographic image(s).

6. An optical component according to any preceding Claim, wherein there are images, each respectively being represented on every nth stripe or nth areas.

7. Element for protection against forgery and/or copying, **characterized by** an optical component according to any preceding Claim.

8. A viewing system, comprising a source of polarised light, an optical component according to any preceding Claim, through which component the polarised light can travel, and an analyser for light which has traversed the optical component, the analyser being rotatable about the axis of the direction of travel of the light; whereby, by rotation the analyser, peaks of maximum contrasts for each image are obtained at specific rotation angles of the analyser, enabling, at each such angle, visualisation of a respective image not otherwise visible.

9. A system according to Claim 8, wherein the source of polarised light is a polarising sheet applied to the surface of the component.

10. A system accorded to Claim 8 or 9, wherein the analyser is a polarising sheet.

11. A viewing system, comprising a reflector which maintains the polarisation direction of incident light, an optical element according to Claims 1 to 6 attached to said reflector, and a polariser which is rotatable about the axis of the direction of travel of the light, such that light which has traversed the polariser and the optical component is reflected at said reflector and traverses a second time the optical component and said polariser; whereby, by rotating said polariser, peaks of maximum contrasts for each image are obtained at specific rotation angles of the polariser, enabling, at each such angle, visualisation of a respective image not otherwise visible.

## Patentansprüche

1. Optische Komponente mit einem oder mehreren Retarder(n) in welchem/welchen eine Vielfalt von Bildern eingebettet sind, wobei die Bilder derart angeordnet sind, dass bei jedem beliebigen Punkt in der Ebene der Komponente ein Element von nicht mehr als einem Bild vorhanden ist, wobei die entsprechenden Bilder in abwechselnden Bereichen enthalten sind, wobei jedes Bild in einem oder mehreren gemusterten Retarder(n) eingebettet ist und jedes davon Muster mit unterschiedlichen optischen Achsen aufweist, so dass jedes Bild mit einer anderen Wechselwirkung mit polarisiertem Licht assoziiert ist.

2. Eine optische Komponente nach Anspruch 1, wobei eine Vielzahl von Retardern, in welche Bilder eingebettet sind, vorhanden ist, und wobei die Retarder die gleichen oder unterschiedliche Verzögerungswerte Δnd aufweisen.

3. Optische Komponente nach Anspruch 1 oder 2, wobei die Bilder in einem oder mehreren Retarder(n) mit spezifischen Bildmustern eingebettet sind, wobei jedes Bildmuster eine bezüglich der anderen Bildmuster unterschiedliche optische Achse aufweist.

4. Optische Komponente nach einem der vorhergehenden Ansprüche, wobei die entsprechenden Bilder in aufeinanderfolgenden, optional parallelen Streifen enthalten sind.

5. Optische Komponente nach einem der vorhergehenden Ansprüche, wobei die Bereiche oder Streifen kleiner oder schmaler als die Auflösung des Auges sind, was eine optische Komponente ermöglicht, in welcher eines oder mehrere Bild(er) (a) photographische Bilder sind/ist.

6. Optische Komponente nach einem der vorhergehenden Ansprüche, wobei die Bilder jeweils auf jedem nten Streifen oder jeder n-ten Fläche repräsentiert sind.

7. Element zum Schutz gegen Fälschung und/oder Kopieren, **gekennzeichnet durch** eine optische Komponente nach einem der vorhergehenden Ansprüche.

8. Betrachtungs-System, enthaltend eine polarisierte Lichtquelle, eine optische Komponente nach einem der vorhergehenden Ansprüche, für welche Komponente das polarisierte Licht hindurchtreten kann, und einen Analysator für Licht, welches die optische Komponente durchtreten hat, wobei der Analysator rotierbar ist um die Achse der Lichtrichtung; wobei, durch Rotation des Analysators, Peaks von maximalem Kontrast für jedes Bild erhalten werden bei spezifischen Rotationswinkeln des Analysators, was es erlaubt, bei einem solchen Winkel das entsprechende Bild sichtbar zu machen, welches sonst unsichtbar ist.

9. System nach Anspruch 8, wobei die Quelle von polarisiertem Licht ein Blatt-Polarisator ist, welcher auf der Oberfläche der Komponente aufgebracht ist.

10. System nach einem der Ansprüche 8 oder 9, wobei der Analysator ein Blatt-Polarisator ist.

11. Betrachtungs-System, enthaltend einen Reflektor, welcher die Polarisations-Richtung des einfallenden Lichtes bewahrt, ein optisches Element, nach einem der Ansprüche 1 bis 6 mit diesem Reflektor verbunden, und einen Polarisator, welcher um die Achse der Lichtrichtung rotierbar ist, so dass Licht, welches den Polarisator und die optische Komponente durchtreten hat, am genannten Reflektor reflektiert wird und ein zweites Mal die optische Komponente durchtritt sowie den genannten Polarisator; wobei, durch Rotation des genannten Polarisators, Peaks von maximalem Kontrast für jedes Bild erhalten werden können bei spezifischen Rotationswinkeln des Polarisators, was es ermöglicht, bei einem solchen Winkel ein entsprechendes Bild zu visualisieren, welches ansonsten unsichtbar ist.

## Revendications

1. Composant optique, comprenant un ou plusieurs retardateur(s) dans lequel/lesquels sont incorporées une pluralité d'images, les images étant aménagées de manière que, à n'importe quel point dans le plan du composant, un élément d'au plus une image soit présent, dans lequel les images respectives sont contenues dans des zones alternées, dans lequel chaque image est incorporée dans un ou plusieurs retardateur(s) tracé(s), chacun ayant des motifs ayant des axes optiques différents, de manière que chaque image soit associée à une interaction différente avec la lumière polarisée.

2. Composant optique selon la revendication 1, dans lequel il existe une pluralité de retardateurs dans lesquels les images sont incorporées, les retardateurs ayant la même valeur de retard Δnd ou des valeurs de retard différentes.

3. Composant optique selon la revendication 1 ou 2, dans lequel les images sont incorporées dans un ou plusieurs retardateurs ayant des motifs d'image spécifiques, chacun motif ayant un axe optique différent de ceux des autres motifs d'image spécifiques.

4. Composant optique selon l'une quelconque des revendications précédentes, dans lequel les images respectives sont contenues dans des rayures successives, optionnellement parallèles.

5. Composant optique selon l'une quelconque des revendications précédentes, dans lequel les zones ou les rayures sont plus petites ou plus étroites que la résolution de l'oeil, rendant possible un composant optique dans lequel une ou plusieurs images est/sont une image (des images) photographique(s).

6. Composant optique selon l'une quelconque des revendications précédentes, dans lequel il existe des images, chacune étant représentée respectivement sur toutes les n rayures ou toutes les n zones.

7. Elément destiné à la protection contre la contrefaçon et/ou le copiage, **caractérisé par** un composant optique selon l'une quelconque des revendications précédentes.

8. Système de visualisation comprenant une source de lumière polarisée, un composant optique selon l'une quelconque des revendications précédentes, à travers lequel composant la lumière polarisée peut se propager, et un analyseur pour la lumière qui a traversé le composant optique, l'analyseur étant apte à être mis en rotation autour de l'axe de la direction de propagation de la lumière ; au moyen de quoi, par une rotation de l'analyseur, des pics de contraste maximal pour chaque image sont obtenus à des angles spécifiques de rotation de l'analyseur, permettant, à chacun de tels angles, la visualisation d'une image respective autrement non visible.

9. Système selon la revendication 8, dans lequel la source de lumière polarisée est une feuille polarisante appliquée à la surface du composant.

10. Système selon la revendication 8 ou 9, dans lequel l'analyseur est une feuille polarisante.

11. Système de visualisation, comprenant un réflecteur qui maintient la direction de polarisation d'une lumière incidente, un élément optique selon les revendications 1 à 6, fixé audit réflecteur, et un polariseur qui est apte à être mis en rotation autour de l'axe de la direction de propagation de la lumière, de telle manière qu'une lumière qui a traversé le polariseur et le composant optique est réfléchie audit réflecteur et traverse pour une deuxième fois le composant optique et ledit polariseur ; au moyen de quoi, par une rotation de l'analyseur, des pics de contraste maximal pour chaque image sont obtenus à des angles spécifiques de rotation du polariseur, permettant, à chacun de tels angles, la visualisation d'une image respective autrement non visible.
